# EUROPÄISCHE PATENTSCHRIFT

(11) **EP 4 244 961 B1**
(45) Veröffentlichungstag und Bekanntmachung des Hinweises auf die Patenterteilung: **18.09.2024**
(21) Anmeldenummer: 22712877.4
(22) Anmeldetag: 01.03.2022
(51) Int. Cl.: H02K 15/00, H02K 17/20

(54) **VERFAHREN ZUR HERSTELLUNG EINES KURZSCHLUSSLÄUFERS MIT GESCHICHTETEM KURZSCHLUSSRING**
METHOD FOR PRODUCING A SHORT CIRCUIT ROTOR WITH COATED SHORT CIRCUIT RING
PROCÉDÉ DE FABRICATION D'UN ROTOR À CAGE D'ÉCUREUIL DOTÉ D'UN ANNEAU DE COURT-CIRCUIT STRATIFIÉ

(30) Priorität: 16.03.2021 EP 21162851
(43) Veröffentlichungstag der Anmeldung: 20.09.2023
(73) Patentinhaber: Innomotics GmbH, 90441 Nürnberg (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(74) Vertreter: Siemens Patent Attorneys
(86) Internationale Anmeldenummer: PCT/EP2022/055031
(87) Internationale Veröffentlichungsnummer: WO 2022/194529

(56) Entgegenhaltungen:
- EP-A1- 3 402 057
- EP-A1- 3 534 512
- DE-A1- 102015 223 058
- DE-C1- 19 542 962
- FR-A1- 2 220 912
- US-A- 1 361 075
- US-A1- 2016 197 539

## Beschreibung

Die Erfindung betrifft ein Verfahren zur Herstellung eines Kurzschlussläufers mit geschichtetem Kurzschlussring einer Asynchronmaschine, als auch die Asynchronmaschine selbst und deren Verwendung bei unterschiedlichen, vorzugsweise industriellen Anwendungen.

Ein Läufer bzw. Rotor bei elektrischen Asynchronmaschinen, also insbesondere Kurzschlussläufer, weisen überwiegend gestapelte Elektrobleche mit Nuten auf. Darin sind elektrische Leiter aus Aluminium bzw. Kupfer. Die Enden der Leiter sind außerhalb des Blechpakets durch einen Kurzschlussring verbunden.

Kurzschlussläufer dynamoelektrischer rotatorischer Maschinen werden im niedrigeren Leistungsbereich (bis ca. 1 MW) in Druckgusstechnik in einem Arbeitsgang hergestellt. Dieses stoffschlüssige Verfahren ist kostenintensiv, da die Druckgussformen teuer sind und vergleichsweise schnell verschleißen. Des Weiteren ist bei der Herstellung eine vergleichsweise hohe Streuung in der Qualität eines derartig hergestellten Kurzschlussläufers vorhanden. Dies äußert sich beispielsweise in der Veränderung der Qualität der Schmelze im Tiegel, durch Verunreinigungen der Schmelze während des Gießprozesses, durch Trennmittel bzw. Abrasion am Werkzeug, ebenso wie durch Lunkerbildung oder Spannungsrissbildung bei Abkühlung des Druckgusses.

Um die, auch bei niedrigen Leistungsbereich, auftretenden Qualitätsverluste zu beheben, wird beispielsweise unter Schutzgaseinfluss der Druckgussvorgang durchführt. Ebenso werden Werkzeuge mit mehreren Entlüftungsmöglichkeiten vorgesehen, oder es wird sogar ein Nachlegieren der Schmelze durchgeführt. Diese Eingriffe ermöglichen die Steigerung der Effizienz des Asynchronkäfigläufers, jedoch sind zur Festigkeit zusätzliche Maßnahmen notwendig, die insbesondere eine hohe Drehzahltauglichkeit beinhalten, wie z.B. Stützringe oder Einsatz von Legierungen, um höhere Festigkeitswerte zu erhalten.

Im höheren Leistungsbereich oder bei Sonderanwendungen dynamoelektrischer rotatorischer Maschinen, werden einzelne Leiterstäbe mit einem Kurzschlussring elektrisch und mechanisch verbunden. Dies geschieht beispielsweise durch Löt- oder Schweißvorgänge, wie dies der DE 34 13 519 C2 und der US 9 570 968 B1 zu entnehmen ist.

Nachteilig dabei ist jedoch, insbesondere bei Lötvorgängen, dass bei diesen größeren dynamoelektrischen Maschinen Kurzschlussringe vorhanden sind, die eine umlaufende Lötwanne aufweisen, die beim Lötprozess komplett mit Lot zu füllen ist. Dabei wird lediglich das Volumen, des in die Lötwanne ragenden Volumen der Läuferstäbe, nicht mit Lot gefüllt. Aufgrund des hohen Silberanteils im Lot ist dabei unter anderem eine Herstellung der Lötverbindung zwischen Läuferstäben und Kurzschlussring wirtschaftlich nicht besonders sinnvoll.

Aus der EP 3 402 057 A1 ist bekannt, Kurzschlussringe mit hohen axialen Kräften auf Leiterstabenden zu pressen. Dazu sind sehr hohe axiale Kräfte notwendig, um eine ausreichende Kontaktierung zwischen Leiterstab und Kurzschlussring zu erhalten. Bei im Blechpaket schräg angeordneten Leiterstäben - aufgrund einer Nutschrägung um Rastmomente zu verringern - besteht die Gefahr des Knickens der Leiterstäbe.

Ein weiteres Verfahren zur Herstellung eines Kurzschlussläufers einer Asynchronmaschine ist aus der US 1 361 075 A bekannt.

Ausgehend davon liegt der Erfindung die Aufgabe zugrunde, ein Verfahren zur Herstellung eines Kurzschlussläufers einer Asynchronmaschine bereitzustellen, das die oben genannten Nachteile vermeidet. Des Weiteren soll der geschaffene Kurzschlussläufer vergleichsweise gute elektrische Eigenschaften aufweisen, als auch in wirtschaftlicher Art und Weise herstellbar sein. Des Weiteren soll eine damit ausgestattete Asynchronmaschine mit hoher Effizienz für die unterschiedlichsten industriellen Anwendungen, insbesondere bei Verdichtern und Kompressoren bereitgestellt werden.

Die Lösung der gestellten Aufgabe gelingt durch ein Verfahren zur Herstellung eines Kurzschlussläufers einer Asynchronmaschine nach Anspruch 1.

Die Lösung der gestellten Aufgabe gelingt auch durch einen Kurzschlussläufer hergestellt nach dem erfindungsgemäßen Verfahren, wobei der Kurzschlussring direkt am Blechpaket anliegt oder davon beabstandet ist.

Die Lösung der gestellten Aufgabe gelingt auch durch eine Asynchronmaschine mit einem erfindungsgemäßen Kurzschlussläufer.

Die Lösung der gestellten Aufgabe gelingt auch durch ein Antriebssystem, insbesondere für Kompressoren, Verdichter, Förderanlagen, oder Fahrzeugantriebe mit zumindest einer erfindungsgemäßen Asynchronmaschine.

Durch das erfindungsgemäße Verfahren wird in einfacher Art und Weise ein Verfahren bereitgestellt, das den Herstellungsaufwand für leistungsfähige Kurzschlussläufer wesentlich reduziert. So sind für das axiale Aufpressen der Einzelbleche auf die Leiterstäbe vergleichsweise geringe Kräfte notwendig. Der Kurzschlussring kann je nach Anforderung ohne großen Aufwand in seiner axialen Höhe variiert werden. Des Weiteren sind thermische Prozesse nur optional vorgesehen, so dass keine Aufheizphasen und Abkühlzeiten im Herstellungsprozess vorzusehen sind. Damit werden Kontaktverbindungen zwischen Leiterstab und Einzelblech mit vergleichsweise hoher elektrischer Leitfähigkeit geschaffen, was auch thermische Verluste im Kurzschlussring reduziert.

Das Verfahren kann somit auch in einfacher Art und Weise automatisiert werden.

Diese Kontaktverbindungen zwischen Leiterstab und Einzelblech sind somit mit einem geringen elektrischen Widerstand ausgestattet, der auch über die Lebensdauer der Asynchronmaschine bestehen bleibt.

Bei dem erfindungsgemäßen Verfahren werden die insbesondere gestanzte Einzelbleche, die dann in Summe den Kurzschlussring bilden, im kalten Zustand, also bei Raumtemperatur oder Umgebungstemperatur mit Übermaß auf die Leiterstäbe axial aufgepresst. Durch das axiale Aufpressen der Einzelbleche wird im Vergleich zum Aufpressen eines gesamten Kurzschlussrings die axiale Fügekraft aufgesplittet und somit wesentlich reduziert. Die Fügekraft liegt beispielsweise für Läufer in der Achshöhe 100 somit unter 50 kN. Das Übermaß von Leiterstab zur Ausnehmung im Einzelblech kann somit höher angesetzt werden, was vor allem eine langlebige Kontaktverbesserung zwischen Leiterstab und Einzelblechen bewirkt.

Damit die thermischen Verluste weiter reduziert werden, werden die Leiterstäbe, vorzugsweise Kupferstäbe, nach dem axialen Einsetzen in die Nuten durch das axiale Aufpressen der Einzelbleche gestaucht, und damit zumindest abschnittsweise ein Anliegen an die Seitenwänden der Nut herbeigeführt.

Alternativ dazu können die Leiterstäbe nicht nur axial gestaucht, sondern auch - sofern vorhanden - über einen Nutschlitz der Nut verstemmt werden.

Die Einzelbleche beispielsweise aus Aluminium (Al) oder Kupfer (Cu) können im Stanzverfahren hergestellt werden und haben somit die in der Stanztechnik üblich hohe Genauigkeit im pm-Bereich. Damit kann das Übermaß zwischen Leiterstab und Ausnehmung des Einzelblechs exakt eingestellt werden.

In einer Ausführung sind die Ausnehmungen der Einzelbleche in Umfangsrichtung geschlossen, was die Kontaktierung zusätzlich verbessert. Bei einer stranggepressten Kurzschlussscheibe ist dies nicht möglich.

Selbstverständlich können die Ausnehmungen der Einzelbleche aber auch mit einem radialen nach außen weisenden Schlitz versehen sein.

2. Erfindungsgemäß werden die Leiterstäbe, zumindest aber die späteren Überstände der Leiterstäbe aus dem Blechpaket des Läufers, mit einer galvanischen Schicht aus Al, Zinn oder einer lötbaren Legierung beschichtet.

Diese Beschichtung hat mehrere Funktionen:
Sie verhindert eine Oxidation an der Oberfläche der Leiterstäbe, insbesondere wenn es sich um Leiterstäbe aus Kupfer handelt. Diese Oxidation würde den elektrischen Widerstand beim Übergang von Leiterstab auf das oder die Einzelbleche des Kurzschlussrings vergrößern, was zu unnötigen Wärmeverlusten im Kurzschlussring führen würde.

Des Weiteren dient diese Beschichtung als Schmierschicht beim axialen Aufschieben der Einzelbleche auf die Überstände der Leiterstäbe. Diese Beschichtung nutzt sich dabei, wie Versuche gezeigt haben, durch das serielle Fügen der Einzelbleche kaum ab, so dass auch das "letzte" aufzuschiebende Einzelblech eine ausreichende Schmierschicht auf den Überständen vorfindet. Somit ist auch beim axialen Fügen des äußeren letzten Einzelbleches noch eine ausreichende Beschichtung auf den Überständen der Leiterstäbe vorhanden.

Optional kann die verbleibende Schicht an den zu verbindenden Flächen- Innenseite Ausnehmung Einzelblech und korrespondierende Außenseite Überstand der Leiterstäbe - für einen Diffusionsprozess genutzt werden. Dazu werden die kalt, bzw. bei Umgebungstemperatur aufgepressten Einzelbleche durch eine außen angelegte Induktionsspule kurzzeitig erhitzt.

Der Kurzschlussring aus Einzelblechen wird dabei auf eine Temperatur aufgeheizt, die höher liegt als der Schmelzpunkt der Beschichtung. Bei einer Beschichtung mit Zinn wäre dies im Bereich 300°C.

Die Schicht verflüssigt sich kurz und erstarrt wieder. Die im pm-Bereich betrachteten unebenen Stanzflächen in der Ausnehmung der Einzelbleche werden durch diesen Vorgang ausgeglichen. Die Anlagefläche der Ausnehmung jedes Einzelbleches zum Überstand des Leiterstabes wird somit im Kurzschlussringbereich vollflächig. Zudem kommt es zu Diffusionsvorgängen zwischen der Beschichtung der Leiterstäbe und den Einzelblechen des Kurzschlussrings, die eine Verbesserung der elektrischen Verbindung zwischen den Leiterstäben und den Einzelblechen bewirken.

Bei der Herstellung der Einzelbleche, insbesondere durch Stanzwerkzeuge, kann je nach Anforderung, ohne großen Aufwand, die Blechdicke und/oder der Durchmesser als auch die Anzahl und/oder Kontur der Ausnehmungen eingestellt werden.

Vorzugsweise sind diese Einzelbleche mit ihrem Innendurchmesser gleich oder größer als der Wellendurchmesser und/oder kleiner oder gleich als der Außendurchmesser des Blechpakets des Läufers.

Durch direkten Kontakt der Einzelbleche, also des Kurzschlussringes mit der Welle, könnte im Betrieb der Asynchronmaschine Wärme über die Welle nach außen abgegeben werden. Mit diesem Verfahren, "kaltes" Aufpressen der Einzelbleche auf Enden von Leiterstäben zur Schaffung eines geschichteten Kurzschlussringes eines Kurzschlussläufers einer Asynchronmaschine, werden erfindungsgemäß geschrägte Läuferblechpakete hergestellt. Durch die reduzierte Fügekraft im Vergleich zum Fügen eines gesamten Kurzschlussrings wird vermieden, dass die schräg aus dem Paket herausragenden Leiterstäbe während des Fügevorganges abknicken oder sich verbiegen. Die Schrägung über die axiale Länge des Läuferblechpakets beträgt dabei das 0,3- bis 3-fache einer Nutteilung des Läufers - also des umfänglichen Abstandes zwischen zwei benachbarten Nuten.

Durch das erfindungsgemäße Verfahren lassen sich auch axial vom Blechpaket beabstandete Kurzschlussringe herstellen. Dies geschieht entweder, indem der Überstand einen Anschlag aufweist, oder indem die einstellbare axiale Fügekraft und ein einstellbarer axialer Fügeweg die Einzelbleche axial genau auf dem Überstand der Leiterstäbe positioniert.

Grundsätzlich stellt sich bei jeder der genannten Ausführungen ein elektrisch gut leitfähiger Kontakt zwischen den Einzelblechen und den Leiterstäben ein. Ein elektrisch leitfähiger Kontakt axial zwischen den jeweiligen Einzelblechen eines Kurzschlussrings wird nicht angestrebt und wird sich, wenn überhaupt nur in einem vergleichsweise geringen Maße einstellen, der aber für den Betrieb einer Asynchronmaschine von untergeordneter Bedeutung ist.

Ein derartig hergestellter Kurzschlussläufer ergibt einen vergleichsweise hohen Wirkungsgrad einer Asynchronmaschine und damit einen effizienten Antrieb für eine Vielzahl von industriellen Anwendungen wie Verdichter und Kompressoren.

Die Erfindung sowie weitere vorteilhafte Ausgestaltungen der Erfindung wurden anhand prinzipiell dargestellter Ausführungsbeispiele näher erläutert; darin zeigen:
- FIG 1: einen prinzipiellen Längsschnitt einer elektrischen Asynchronmaschine mit Kurzschlussläufer,
- FIG 2: einen prinzipiellen Herstellervorgang,
- FIG 3: eine perspektivische Darstellung des Herstellervorgangs,
- FIG 4: einen prinzipiellen Herstellervorgang bei axial schräg verlaufenden Nuten,
- FIG 5: ein Kurzschlussläufer auf einer Welle,
- FIG 6, 7: Darstellung des Übermaßes der Bleche an den Leiterstäben.

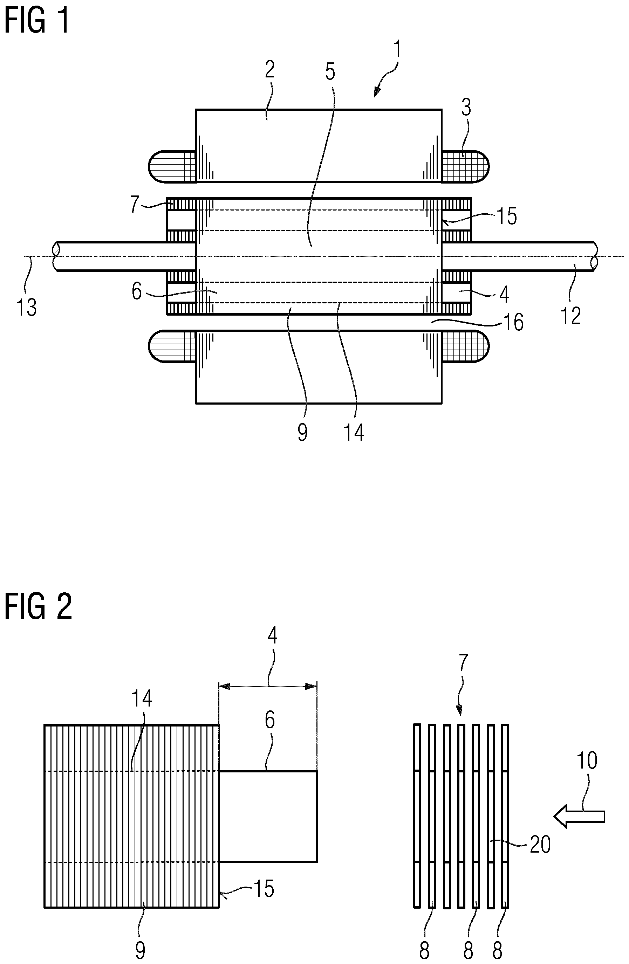

FIG 1 zeigt in einer prinzipiellen Darstellung eine elektrische Asynchronmaschine 1 mit einem Stator 2, an dessen Stirnseiten sich Wickelköpfe eines Wicklungssystems 3 befinden, das in, im Wesentlichen axial verlaufenden Nuten des Stators 2 angeordnet ist. Radial vom Stator 2 beabstandet und von einem Luftspalt 16 getrennt ist ein Läufer 5 bzw. Rotor 5 angeordnet, der als Kurzschlussläufer ausgeführt ist.

Dabei sind in, im Wesentlichen axial verlaufenden Nuten 14 eines Blechpakets 9 des Läufers 5, Leiterstäbe 6 angeordnet, die an den Stirnseiten 15 des Läufers 5 axial überstehen. Unter im Wesentlichen axial verlaufenden Nuten 14 werden dabei Nuten 14 verstanden, die in ihrem axialen Verlauf keine Schrägung aufweisen, also achsparallel verlaufen oder eine Schrägung der Nuten 14 in ihrem axialen verlauf aufweisen, der bis zu dem 3-fache einer Nutteilung ausmacht.

An diesen Überständen 4 sind Kurzschlussringe 7 positioniert, die die einzelnen Leiterstäbe 6 auf einer Stirnseite 15 kurzschließen. Die Kurzschlussringe 7 sind, wie in diesem Fall, zusätzlich mit einer Welle 12 kontaktiert, um eine Wärmeableitung über die Welle 12 zu ermöglichen.

Ebenso sind aber Ausführungen möglich, bei denen der Kurzschlussring 7 nicht mit der Welle 12 in Verbindung steht.

Der Kurzschlussring 7 ist grundsätzlich bei den oben genannten Ausführungen aus Einzelblechen 8 aufgebaut, die auf die axialen Überstände 4 der Leiterstäbe 6 einer Stirnseite 15 geschoben wurden, wie dies im Folgenden noch näher beschrieben wird.

Durch elektromagnetische Wechselwirkung des bestromten Wicklungssystems 3 des Stators 2 mit dem Läufer 5 wird der mit der Welle 12 drehfest verbundene Läufer 5 in Drehung um eine Achse 13 versetzt. Damit sind Arbeitsmaschinen u.a. Verdichter, Förderbänder oder Kompressoren antreibbar.

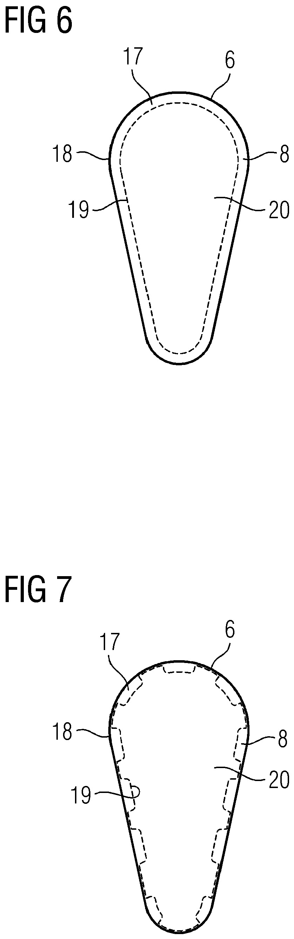

FIG 2 zeigt in einer prinzipiellen Darstellung, wie der Herstellungsvorgang eines Kurzschlussrings 7 prinzipiell von statten geht. Auf den Überstand 4 der Leiterstäbe 6, die aus der Stirnseite 15 des Blechpakets 9 des Läufers 5 ragen, werden die Einzelbleche 8 mit vergleichsweise geringer axialer Fügekraft axial aufgesetzt. Dabei weisen die Leiterstäbe 6 bezüglich der jeweiligen Öffnungen der Einzelbleche 8 ein Übermaß 17 auf, wie dies beispielsweise auch der FIG 6 und FIG 7 zu entnehmen ist.

Erfindungsgemäß können dabei sogar die Leiterstäbe 6 innerhalb des Blechpakets 9 des Läufers 5 schräg verlaufen, ohne dass durch den axialen Fügevorgang 10 die Leiterstäbe 6 knicken.

Die Schrägung eines Leiterstabes 6 über die axiale Länge des Blechpakets 9 des Läufers 5 betrachtet, kann dabei bis zu 3 Nutteilungen betragen. Eine Nutteilung ist, in Umfangsrichtung betrachtet, dabei der Abstand zwischen zwei benachbarten Nuten 14 des Läufers 5.

Somit wird nunmehr der Kurzschlussring 7 axial betrachtet aus mehreren Einzelblechen 8 aufgebaut, die jeweils in gut leitenden elektrischen Kontakt mit den Leiterstäben 6 stehen. Ein elektrisch gut leitfähiger Kontakt axial zwischen den Einzelblechen 8 auf einer Stirnseite 15 ist nicht notwendig und muss daher auch nicht durch zusätzliche Schweißvorgänge bzw. Lötvorgänge unterstützt werden, was den Aufbau eines Kurzschlussläufers wesentlich vereinfacht. Die Kontaktierung der Leiterstäbe 6 durch die jeweiligen Einzelbleche 8 ist allein ausreichend, um einen funktionsfähigen Kurzschlussläufer für eine Asynchronmaschine 1 mit vergleichsweise hohem Wirkungsgrad zu schaffen.

Der Kurzschlussring 7 besteht somit aus Einzelblechen 8. Somit ist die Fügekraft beim Herstellungsvorgang des Kurzschlussrings aufgesplittet und kann mit vergleichsweise kleinem Equipment, wie Pressen etc. erfolgen, da die erforderlichen Fügekräfte vergleichsweise gering sind. Damit können nunmehr auch geschrägte Rotorpakete, also Blechpakete 9 mit Schrägung der Nuten 14 in einfacher Art und Weise hergestellt werden, ohne dass die Gefahr der Knickung der Leiterstäbe 6 im Bereich des Überstandes 4 besteht.

Eine Beschichtung der Leiterstäbe 6, insbesondere der Kupferstäbe, gewährleistet eine Vermeidung einer Oxidschicht und ist vorteilhaft bezüglich dem Fügeverfahren und den Verknüpfungsflächen von Leiterstab 6 zu den jeweiligen Einzelblechen 8 des Kurzschlussringes 7.

Durch die zumindest abschnittsweise erfolgte Presspassung zwischen Leiterstab 6 und Ausnehmung 20 in den Einzelblechen 8 wird eine Dauerfestigkeit der Verbindung auch unter thermischen Lastspielen einer Asynchronmaschine gewährleistet.

Lässt man die Leiterstäbe 6 über die Kurzschlussringe 7 überstehen, so dienen diese als Lüfterflügel im Betrieb der Asynchronmaschine. Dabei ist die axiale Dicke des Kurzschlussringes 7, also der gestapelten Einzelbleche 8 geringer als der Überstand 4. Die Verlustwärme wird dabei direkt axial aus den Heißzonen des Läufers 5 herausgeführt.

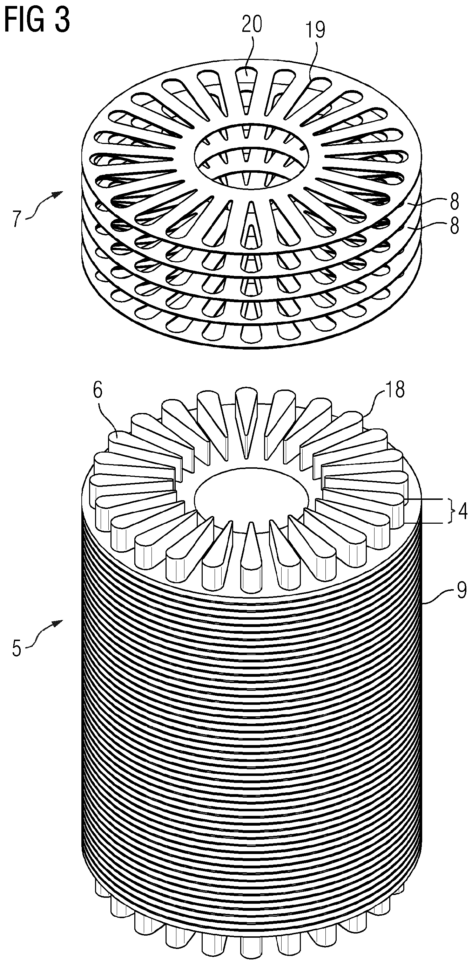

FIG 3 zeigt in einer perspektivischen Darstellung den Läufer 5 mit seinem Blechpaket 9 und den Überständen 4 der Leiterstäbe 6 an der Stirnseite 15 des Blechpakets 9. Auf diese Überstände 4 werden nunmehr, um einen Kurzschlussring 7 zu erhalten, die Einzelbleche 8 axial auf die Überstände 4 gepresst. Jedes Einzelblech 8 wird einzeln aufgepresst, um die axiale Fügekraft zu reduzieren, die bei einer massiven Kurzschlussscheibe notwendig wäre.

Die Nuten 14 des Blechpakets 9 des Läufers 5 sind zu einem Luftspalt 16 hin geschlossen ausgeführt, ebenso ist es möglich diese Nuten 14 zumindest teilgeöffnet in Richtung Luftspalt 16 auszuführen. Die Leiterstäbe 6, insbesondere Kupfer, sind dabei in diese Nuten 14 axial eingesetzt.

Die Querschnittsform 19 der Ausnehmungen 20 der Einzelbleche 8 weisen bezüglich den Querschnittsform 18 der Leiterstäbe 6 zumindest abschnittsweise ein Untermaß auf, so dass ein Pressvorgang zur Kontaktierung von Leiterstäben 6 und Einzelblechen 8 notwendig ist.

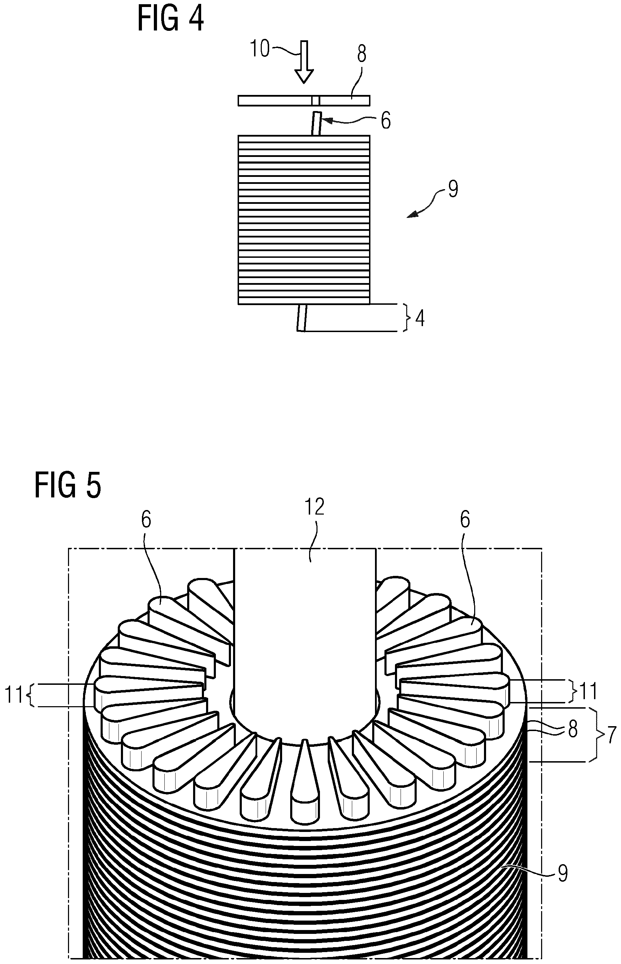

FIG 4 zeigt in einer prinzipiellen Darstellung einen Montagevorgang eines Einzelbleches 8 auf einen Leiterstab 6 bzw. dessen Überstand 4, wobei der Leiterstab 6 in dem Blechpaket 9 auf einer vorgegebenen Nutschrägung des Läufers 5 geschrägt angeordnet ist. Aufgrund des Einzelbleches 8 ist die Kraft für das axiale Aufschieben 10 vergleichsweise gering, so dass ein Knicken des Leiterstabes 6 im Bereich seines Überstandes 4 ausgeschlossen ist.

FIG 5 zeigt in einer teilperspektivischen Darstellung einen Läufer 5 mit seinem Blechpaket 9, wobei ein Kurzschlussring 7 durch Einzelbleche 8 bereits aufgebracht wurde. Aus dem Kurzschlussring 7 ragen axial die Leiterstäbe 6, die so im Betrieb der Asynchronmaschine 1 für Luftverwirbelungen sorgen und damit eine Kühlwirkung entfalten. Das Blechpaket 9 des Läufers 5 ist in dieser Ausführung mit einer Welle 12 drehfest verbunden, insbesondere aufgeschrumpft.

FIG 6 zeigt einen Querschnitt eines Leiterstabs 6 und eine Ausnehmung 20 eines Einzelblechs 8. Dabei ist das Übermaß 17 des Leiterstabs 6 gezeigt, der so zu einer Pressung und Mikroverschweißung mit den jeweiligen Einzelblechen 8 führt.

Das Übermaß 17 ist dabei in dieser Ausführung so gewählt, dass die Querschnittsform des Leiterstabes 6 und die Querschnittsform der Ausnehmung 20 des Einzelbleches 8 identisch sind. Dabei ist die Dimensionierung der Querschnittsform des Einzelbleches 8 zur Erhaltung des Übermaßes etwas größer ausgestaltet, um eine Presspassung zu erhalten.

FIG 7 wird bei ähnlicher Querschnittsform 18 des Leiterstabes 6 die Ausnehmung 20 des Einzelbleche 8 so ausgeführt, dass ein Übermaß lediglich an gewissen Abschnitten auftritt. Damit wird auch nur an diesen Abschnitten ein späterer Stromfluss von Leiterstab 6 auf das Einzelbleche 8 zu benachbarten Leiterstäbe 6 ermöglicht.

Die Querschnittsformen der Ausnehmung 20, als auch der Leiterstäbe 6 müssen dabei nicht identisch sein und/oder über den gesamten Umfang ein Übermaß aufweisen, sondern es können auch nur abschnittsweise Bereiche mit Übermaß an den Leiterstäben 6 vorhanden sein.

Derartige Rotoren 5 mit erfindungsgemäßen Kurzschlussläufern werden bei Asynchronmaschinen 1 eingesetzt, die als Antriebssystem, insbesondere für Kompressoren, Verdichter, Förderanlagen, oder Fahrzeugantriebe vorgesehen sind. Aufgrund der hohen Betriebsdauern derartiger Antriebssysteme ist dabei eine hohe Effizienz der Antriebssysteme kundenseitig von Vorteil, indem Energiekosten eingespart und/oder Batteriesysteme bei Fahrzeugen höhere Reichweiten ermöglichen.

## Patentansprüche

1. Verfahren zur Herstellung eines Kurzschlussläufers (5) einer Asynchronmaschine (1) durch folgende Schritte:
- Bereitstellen eines Blechpakets (9) des Läufers (5) mit im Wesentlichen axial verlaufenden Nuten (14),
- einsetzen von Leiterstäben (6) in die Nuten (14) aus einem ersten leitfähigen Material, derart, dass die Leiterstäbe (6) aus den Stirnseiten (15) des Blechpakets (9) ragen, wobei das Blechpaket (9) geschrägt ist, indem die axiale Schrägung über die axiale Länge des Blechpakets das 0,3-bis 3-fache einer Nutteilung des Läufers beträgt, wobei die Leiterstäbe (6) schräg aus dem Blechpaket (9) herausragen, wobei die Leiterstäbe (6), zumindest aber die Überstände der Leiterstäbe (6), aus dem Blechpaket (9) des Läufers (5), mit einer galvanischen Schicht aus Aluminium, Zinn oder einer lötbaren Legierung beschichtet sind, wobei die Beschichtung als Schmierschicht beim axialen Aufschieben auf die Überstände der Leiterstäbe (6) dient,
- Bereitstellen einer vorgebbaren Anzahl von vorgestanzten Einzelblechen (8) mit jeweils vorgegebener Kontur aus einem zweiten leitfähigen Material,
- einzelnes, axiales Aufpressen (10) dieser Einzelbleche (8) nacheinander, auf die aus der Stirnseite (15) des Blechpakets (9) ragenden Leiterstäbe (6), wobei die Einzelbleche (8) die aus einer Stirnseite (15) ragenden Leiterstäbe (6) kurzschließen und somit einen Kurzschlussring (7) bilden, der aus mehreren Einzelblechen (8) aufgebaut ist.

2. Verfahren zur Herstellung eines Kurzschlussläufers (5) nach Anspruch 1, **dadurch gekennzeichnet, dass** die Leiterstäbe (6) in den Nuten (14) zumindest abschnittsweise an den Seitenwänden der jeweiligen Nut (14) anliegen, indem die Leiterstäbe (6) durch das axiale Aufpressen der Einzelbleche (8) oder durch einen separaten Verstemmprozess in den Nuten (14) fixiert werden.

3. Verfahren zur Herstellung eines Kurzschlussläufers (5) nach einem der vorhergehenden Ansprüche, **dadurch gekennzeichnet, dass** die Einzelbleche (8) eine vorgebbare Anzahl Ausnehmungen (20) aufweisen, die der Anzahl der Nuten (14) entspricht.

4. Verfahren zur Herstellung eines Kurzschlussläufers (5) nach einem der vorhergehenden Ansprüche, **dadurch gekennzeichnet, dass** die Leiterstäbe (6) gegenüber den Ausnehmungen (20) zumindest abschnittsweise ein Übermaß aufweisen, so dass bei einem axialen Fügevorgang (10), die zulässigen Scherspannungen des ersten leitfähigen Materials der Leiterstäbe (6) und des zweiten leitfähigen Materials der Einzelbleche (8) lokal überschritten werden und dabei Stoffübergänge durch Diffusion an der Grenzfläche zwischen Leiterstab (6) und Einzelblech (8) verursacht werden, die zu einer Mikroverschweißung von Leiterstab (6) und jeweiligem Einzelblech (8) führen.

5. Verfahren zur Herstellung eines Kurzschlussläufers (5) nach einem der vorhergehenden Ansprüche, **dadurch gekennzeichnet, dass** das erste Material vorzugsweise Kupfer oder eine Kupferlegierung ist und das zweite Material vorzugsweise Aluminium, Kupfer oder eine Aluminium- oder Kupferlegierung ist.

6. Verfahren zur Herstellung eines Kurzschlussläufers (5) nach einem der vorhergehenden Ansprüche, **dadurch gekennzeichnet, dass** die Leiterstäbe (6), insbesondere im Bereich der Überstände (4), angeschrägt sind, sich also in ihrem Umfang verringern.

7. Verfahren zur Herstellung eines Kurzschlussläufers (5) nach einem der vorhergehenden Ansprüche, **dadurch gekennzeichnet, dass** die Einzelbleche (8) im Bereich der Leiterstäbe (6) Ausnehmungen (20) aufweisen, deren Querschnittsformen im Wesentlichen denen der Leiterstäbe (6) entsprechen, wobei die Querschnittsformen der Leiterstäbe (6) zumindest abschnittsweise größer als die der Ausnehmungen (20) ausgeführt sind, also ein Übermaß aufweisen, um eine Mikroverschweißung zwischen Leiterstab (6) und jeweiligen Einzelblechen (8) zu erhalten.

8. Verfahren zur Herstellung eines Kurzschlussläufers (5) nach einem der vorhergehenden Ansprüche, **dadurch gekennzeichnet, dass** zumindest ein Leiterstab (6) aus gezogenem Elektrokupfer mit einem Leitwert von mindestens 58 MS/m vorgesehen ist.

9. Verfahren zur Herstellung eines Kurzschlussläufers (5) nach einem der vorhergehenden Ansprüche, **dadurch gekennzeichnet, dass** der Kurzschlussläufer (5) durch eine gleichzeitige und/oder nachträgliche Wärmebehandlung die Dehngrenze der Einzelbleche (8) gesteigert wird und/oder die Leitfähigkeit zwischen Leiterstab (6) und Einzelblech (8) vergrößert wird.

10. Verfahren zur Herstellung eines Kurzschlussläufers (5) nach einem der vorhergehenden Ansprüche, **dadurch gekennzeichnet, dass** die Einzelbleche (8) gestanzt sind.

11. Verfahren zur Herstellung eines Kurzschlussläufers (5) nach einem der vorhergehenden Ansprüche, **dadurch gekennzeichnet, dass** die Ausnehmungen (20) der Einzelbleche (8) eine geschlossene Kontur oder eine geschlitzte Kontur aufweisen.

12. Kurzschlussläufer (5) hergestellt nach einem der vorhergehenden Ansprüche, wobei der Kurzschlussring (7) direkt am Blechpaket (9) anliegt oder davon beabstandet ist.

13. Kurzschlussläufer (5) nach Anspruch 12, wobei die Einzelbleche (8) des Kurzschlussringes (7) nur über die jeweiligen Leiterstäbe (6) elektrisch miteinander in Kontakt stehen.

14. Asynchronmaschine (1) mit einem Kurzschlussläufer (5) nach Anspruch 12 oder 13.

15. Antriebssystem, insbesondere für Kompressoren, Verdichter, Förderanlagen, oder Fahrzeugantriebe mit zumindest einer Asynchronmaschine (1) nach Anspruch 14.

## Claims

1. Method for producing a short-circuit rotor (5) of an asynchronous machine (1) using the following steps:
- provision of a laminated core (9) of the rotor (5) with substantially axially running slots (14),
- insertion of conductor bars (6) into the slots (14) made of a first conductive material, such that the conductor bars (6) protrude out of the end faces (15) of the laminated core (9), wherein the laminated core (9) is skewed, in that the axial skew over the axial length of the laminated core is 0.3 to 3 times a slot pitch of the rotor, wherein the conductor bars (6) protrude in a skewed manner out of the laminated core (9), wherein the conductor bars (6), but at least the overhangs of the conductor bars (6) out of the laminated core (9) of the rotor (5), are coated with a galvanic layer made of aluminium, tin or a solderable alloy, wherein the coating serves as a lubricating layer when axially pushing onto the overhangs of the conductor bars (6),
- provision of a specifiable number of pre-stamped individual laminations (8), each with a specified contour, made of a second conductive material,
- individual, axial pressing (10) of these individual laminations (8) one after the other onto the conductor bars (6) protruding from the end face (15) of the laminated core (8), wherein the individual laminations (8) short-circuit the conductor bars (6) protruding from an end face (15) and thus form a short-circuit ring (7), which is composed of multiple individual laminations (8).

2. Method for producing a short-circuit rotor (5) according to claim 1, **characterised in that** the conductor bars (6) in the slots (14) abut the side walls of the respective slot (14) at least in sections, **in that** the conductor bars (6) are fixed into the slots (14) by axially pressing the individual laminations (8) or by a separate caulking process.

3. Method for producing a short-circuit rotor (5) according to one of the preceding claims, **characterised in that** the individual laminations (8) have a specifiable number of recesses (20) which corresponds to the number of the slots (14) .

4. Method for producing a short-circuit rotor (5) according to one of the preceding claims, **characterised in that** the conductor bars (6) are oversized compared to the recesses (20) at least in sections, so that in an axial joining procedure (10) the permissible shear stresses of the first conductive material of the conductor bars (6) and of the second conductive material of the individual laminations (8) are locally exceeded and in this case material transfers are caused by diffusion at the boundary surface between the conductor bar (6) and the individual lamination (8), which result in micro-welding of the conductor bar (6) and a respective individual lamination (8).

5. Method for producing a short-circuit rotor (5) according to one of the preceding claims, **characterised in that** the first material is preferably copper or a copper alloy and the second material is preferably aluminium, copper or an aluminium or copper alloy.

6. Method for producing a short-circuit rotor (5) according to one of the preceding claims, **characterised in that** the conductor bars (6), in particular in the region of the overhangs (4), are chamfered, in other words reduce in size.

7. Method for producing a short-circuit rotor (5) according to one of the preceding claims, **characterised in that** the individual laminations (8) have recesses (20) in the region of the conductor bars (6), the cross-sectional shapes of which substantially correspond to those of the conductor bars (6), wherein the cross-sectional shapes of the conductor bars (6) are designed to be larger, at least in sections, than those of the recesses (20), in other words are oversized, in order to obtain a microweld between the conductor bar (6) and the respective individual laminations (8).

8. Method for producing a short-circuit rotor (5) according to one of the preceding claims, **characterised in that** at least one conductor bar (6) made of drawn electro-copper with a conductance of at least 58 MS/m is provided.

9. Method for producing a short-circuit rotor (5) according to one of the preceding claims, **characterised in that** by a simultaneous and/or subsequent heat treatment of the short-circuit rotor (5) the yield point of the individual laminations (8) is raised and/or the conductivity between the conductor bar (6) and the individual lamination (8) is increased.

10. Method for producing a short-circuit rotor (5) according to one of the preceding claims, **characterised in that** the individual laminations (8) are stamped.

11. Method for producing a short-circuit rotor (5) according to one of the preceding claims, **characterised in that** the recesses (20) in the individual laminations (8) have a closed contour or a slotted contour.

12. Short-circuit rotor (5) produced according to one of the preceding claims, wherein the short-circuit ring (7) directly abuts the laminated core (9) or is spaced apart therefrom.

13. Short-circuit rotor (5) according to claim 12, wherein the individual laminations (8) of the short-circuit ring (7) are electrically in contact with one another only via the respective conductor bars (6).

14. Asynchronous machine (1) with a short-circuit rotor (5) according to claim 12 or 13.

15. Drive system, in particular for compressors, compactors, conveyor systems, or vehicle drives with at least one asynchronous machine (1) according to claim 14.

## Revendications

1. Procédé de fabrication d'un rotor (5) à cage d'écureuil d'une machine (1) asynchrone par les stades suivants :
- on se procure un paquet (9) de tôles du rotor (5) ayant des encoches (14) s'étendant sensiblement axialement,
- on insère, dans les encoches (14), des barreaux (6) conducteurs en un premier matériau conducteur, de manière à ce que les barreaux (6) conducteurs fassent saillie des côtés (15) frontaux du paquet (9) de tôles, dans lequel le paquet (9) de tôles est incliné, par le fait que l'inclinaison axiale sur la longueur axiale du paquet de tôles représente de 0,3 à 3 fois un pas d'encoche du rotor, dans lequel les barreaux (6) conducteurs font saillie de manière inclinée du paquet (9) de tôles, dans lequel les barreaux (6) conducteurs, mais du moins les saillies des barreaux (6) conducteurs du paquet (9) de tôles du rotor (5), sont revêtus d'une couche galvanique en aluminium, en étain ou en un alliage soudable, dans lequel le revêtement sert de couche lubrifiante, lors du coulissement axial sur les saillies des barreaux (6) conducteurs,
- on se procure un nombre pouvant être donné à l'avance de tôles (8) individuelles prédécoupées en un deuxième matériau conducteur ayant chacune un contour donné à l'avance,
- on presse (10) axialement individuellement ces tôles (8) individuelles les unes après les autres sur les barreaux (6) conducteurs faisant saillie du côté (15) frontal du paquet (9) de tôles, dans lequel les tôles (8) individuelles court-circuitent les barreaux (6) conducteurs faisant saillie d'un côté (15) frontal et forment ainsi un anneau (7) de court-circuit, qui est formé de plusieurs tôles (8) individuelles.

2. Procédé de fabrication d'un rotor (5) à cage d'écureuil suivant la revendication 1, **caractérisé en ce que** les barreaux (6) conducteurs s'appliquent aux encoches (14) au moins par endroits sur les parois latérales de l'encoche (14) respective, par le fait que l'on fixe les barreaux (6) conducteurs en pressant axialement les tôles (8) individuelles ou par une opération de matage distincte dans les encoches (14).

3. Procédé de fabrication d'un rotor (5) à cage d'écureuil suivant l'une des revendications précédentes, **caractérisé en ce que** les tôles (8) individuelles ont un nombre pouvant être donné à l'avance d'évidements (20), qui correspond au nombre des encoches (14) .

4. Procédé de fabrication d'un rotor (5) à cage d'écureuil suivant l'une des revendications précédentes, **caractérisé en ce que** les barreaux (6) conducteurs ont, par rapport aux évidements (20) au moins par endroits, un surdimensionnement de sorte que, lors d'une opération (10) d'assemblage axial, les tensions de cisaillement admissibles du premier matériau conducteur des barreaux (6) conducteurs et du deuxième matériau conducteur des tôles (8) individuelles sont dépassées localement et qu'ainsi sont provoquées des transitions de matière par diffusion à la surface limite entre barreau (6) conducteur et tôle (8) individuelle, qui conduisent à une microsoudure du barreau (6) conducteur et de la tôle (8) individuelle respective.

5. Procédé de fabrication d'un rotor (5) à cage d'écureuil suivant l'une des revendications précédentes, **caractérisé en ce que** le premier matériau est de préférence du cuivre ou un alliage de cuivre, et **en ce que** le deuxième matériau est de préférence de l'aluminium, du cuivre ou un alliage d'aluminium ou un alliage de cuivre.

6. Procédé de fabrication d'un rotor (5) à cage d'écureuil suivant l'une des revendications précédentes, **caractérisé en ce que** les barreaux (6) conducteurs sont en oblique, en particulier dans la partie des saillies (4), en ayant donc leur pourtour qui diminue.

7. Procédé de fabrication d'un rotor (5) à cage d'écureuil suivant l'une des revendications précédentes, **caractérisé en ce que** les tôles (8) individuelles ont, dans la partie des barreaux (6) conducteurs, des évidements (20), dont les formes de section transversale correspondent sensiblement à celles des barreaux (6) conducteurs, dans lequel les formes de section transversale des barreaux (6) conducteurs sont au moins par endroits plus grandes que celles des évidements (20), en ayant donc une surdimension pour obtenir un microsoudage entre barreau (6) conducteur et tôles (8) individuelles respectives.

8. Procédé de fabrication d'un rotor (5) à cage d'écureuil suivant l'une des revendications précédentes, **caractérisé en ce qu'**il est prévu au moins un barreau (6) conducteur en cuivre électrique étiré, d'une conductance d'au moins 58 MS/m.

9. Procédé de fabrication d'un rotor (5) à cage d'écureuil suivant l'une des revendications précédentes, **caractérisé en ce que**, par un traitement thermique simultané et/ou ultérieur, on améliore, dans le rotor (5) à cage d'écureuil, la limite élastique des tôles (8) élastiques et/ou on augmente la conductivité entre barreau (6) conducteur et tôle (8) individuelle.

10. Procédé de fabrication d'un rotor (5) à cage d'écureuil suivant l'une des revendications précédentes, **caractérisé en ce que** l'on estampe les tôles (8) individuelles.

11. Procédé de fabrication d'un rotor (5) à cage d'écureuil suivant l'une des revendications précédentes, **caractérisé en ce que** les évidements (20) des tôles (8) individuelles ont un contour fermé ou un contour fendu.

12. Rotor (5) à cage d'écureuil fabriqué suivant l'une des revendications précédentes, dans lequel l'anneau (7) de court-circuit s'applique directement au paquet (9) de tôles ou en est à distance.

13. Rotor (5) de court-circuit suivant la revendication 12, dans lequel les tôles (8) individuelles de l'anneau (7) de court-circuit ne sont en contact électriquement entre elles que par les barreaux (6) conducteurs respectifs.

14. Machine (1) asynchrone ayant un rotor (5) à cage d'écureuil suivant la revendication 12 ou 13.

15. Système d'entraînement, en particulier pour des compresseurs, des condenseurs, des installations de transport ou des entraînements de véhicules ayant au moins une machine (1) asynchrone suivant la revendication 14.
